# EUROPÄISCHE PATENTSCHRIFT

(11) **EP 1 829 444 B1**
(45) Veröffentlichungstag und Bekanntmachung des Hinweises auf die Patenterteilung: **28.07.2010**
(21) Anmeldenummer: 07003133.1
(22) Anmeldetag: 14.02.2007
(51) Int. Cl.: A01D 78/10

(54) **Kreiselschwader**
Rotary swather
Andaineuse rotative

(30) Priorität: 02.03.2006 DE 202006003320 U
(43) Veröffentlichungstag der Anmeldung: 05.09.2007
(73) Patentinhaber: FELLA-Werke GmbH, 90533 Feucht (DE)
(72) Erfinder: Riedel, Jürgen, 91161 Hilpoltstein (DE); Pürrer, Josef, 90537 Feucht (DE)
(74) Vertreter: Grünecker, Kinkeldey, Stockmair & Schwanhäusser Anwaltssozietät

(56) Entgegenhaltungen:
- EP-A1- 0 753 247
- EP-A1- 1 488 684
- EP-A2- 0 484 794

## Beschreibung

Die Erfindung betrifft einen Kreiselschwader gemäß dem Oberbegriff des Anspruchs 1.

Der Kreiselschwader ist ein landwirtschaftliches Gerät, das von einem Traktor gezogen und über eine Zapfwelle betrieben wird. Es dient beispielsweise dem Zusammenfassen des auf der Wiese liegenden Heus zu gleichmäßigen Reihen, um das Heu abzutransportieren oder aber zum Abtrocknen in Form zu bringen. Für die Forderung der modernen Landwirtschaft nach größeren, leistungsfähigeren Schwadmaschinen sind heute Mehrkreiselschwader in Einsatz, bei welchen die Kreisel an einem Fahrwerksrahmen hoch schwenkbar angeordnet sind, damit die Gesamtbreite der Maschine auf einfache Weise auf das für den Straßenverkehr zulässige Gesamtbreitenmaß von maximal 3 m reduziert werden kann.

Für die von der Praxis geforderte Steigerung der Flächenleistung wurden mittlerweile Schwaderrotoren mit einem Durchmesser von bis zu 4 m entwickelt. Bei der Umstellung in die Transportposition entstünde dadurch eine Transporthöhe, welche das gesetzliche zulässige Maß deutlich überschreiten würde. Es ist daher erforderlich, dass für den Transport an solchen Maschinen ein Teil der Kreiselarme abgenommen und Schutzbügel eingeklappt werden müssen, damit die Transporthöhe auf das zulässige Maß reduziert wird. Das Abnehmen der bei großen Maschinen schweren Kreiselarme sowie das Umklappen der Schutzbügel ist anstrengend und zeitraubend. Von der Praxis wird daher ein Umstellverfahren gewünscht, welches der Schlepperfahrer bequem vom Fahrersitz aus bedienen kann.

Aus der EP 0 784 920 ist ein Kreiselschwader mit einem Fahrgestell bekannt. Diese Druckschrift zeigt mindestens einen an dem Fahrgestell beweglich angelenkten Schwaderrotor, sowie eine Aushebekinematik zum Ausheben des mindestens einen Schwaderrotors aus einer Arbeitsstellung in eine erhöhte Stellung, sowie eine Schwenkeinrichtung zum Schwenken des Schwaderrotors in eine diagonal über dem Fahrgestell liegende Transportstellung.

In der EP 0 838 146 ist bereits ein Schwaderrotor gezeigt, der in der Transportstellung annähernd mittig über einen mittleren Hauptrahmen des Fahrgestells liegt.

Der vorliegenden Erfindung liegt daher die Aufgabe zugrunde, eine Vorrichtung bereitzustellen, bei welcher das Überführen von Schwaderrotoren mit großem Durchmesser in eine für den Straßenverkehr zulässige Anordnung möglich ist, ohne dass der Kreiseldurchmesser durch Abnehmen von Kreiselarmen reduziert werden muss.

Erfindungsgemäß wird diese Aufgabe durch die Merkmale des Anspruchs 1 gelöst.

Dadurch, dass gemäß der vorliegenden Erfindung der Schwaderrotor zunächst aus einer Arbeitsstellung in eine erhöhte Vorgewendestellung angehoben wird, kann er dann durch eine Schwenkbewegung in eine diagonale Transportstellung verschwenkt werden, ohne dass bei der Schwenkbewegung der Schwaderrotor den Boden berührt. Weder zur Realisierung der Schwenkbewegung noch zur Einhaltung der für den Straßenverkehr zulässigen Fahrzeugkontur ist es notwendig, Komponenten des Schwaderrotors, wie etwa Kreiselarme bzw. Schutzbügel, etc., mechanisch abzumontieren. Mit dem erfindungsgemäßen Kreiselschwader kann der Schlepperfahrer bequem vom Fahrersitz aus die Schwaderrotoren in eine Transportstellung überführen, die die gesetzlich zulässige Transporthöhe bzw. Transportbreite nicht überschreitet. Dies ist insbesondere bei großen Schwaderrotordurchmessem von 3 bis 4,5 m vorteilhaft. Dadurch, dass in der Transportstellung der Schwaderrotor eine diagonale Stellung über dem Fahrgestellt, d. h. über dem Fahrwerksrahmen einnimmt, kann die Höhe deutlich reduziert werden.

Die Aushebekinematik ist derart ausgebildet ist, dass sie den mindestens einen Schwaderrotor aus der unterhalb und seitlich des Fahrgestelles befindlichen Artieitsstellung annähernd bodenparallel in die Vorgewendestellung aushebt. Dann kann der Schwaderrotor in eine Transportstellung verschwenkt werden, die annähernd mittig über einen mittleren Transportrahmen des Fahrgestells liegt. Wenn der Schwaderrotor annähernd mittig über dem mittleren Hauptrahmen des Fahrgestells liegt, können die für den Straßenverkehr zulässigen Fahrzeugkonturen leicht eingehalten werden. Eine derartige Anordnung ist sehr platzsparend.

Die Aushebekinematik und die Schwenkeinrichtung können entweder durch ein einziges Bewegungssystem realisiert werden, das eine Hub- und Schwenkbewegung durchführt, oder aber zwei voneinander unabhängige Bewegungssysteme.

Die Aushebekinematik umfasst vorzugsweise eine Gelenkviereckskinematik, die beispielsweise mit einem oder mehreren Hydraulikzylindern, insbesondere einfach wirkenden Hydraulikzylindern, realisiert wird.

Auf diese Art und Weise kann in einfacher Art und Weise platzsparend und kostengünstig ein Anheben des Schwaderrotors in eine erhöhte Stellung durch einfaches Bewegen des Hydraulikzylinders bewerkstelligt werden.

Die Schwenkeinrichtung umfasst vorzugsweise eine Tragschwinge, die um eine in Fahrtrichtung liegende Achse schwenkbar ist. Die Aushebekinematik ist an der Tragschwinge befestigt, derart, dass sich die Aushebekinematik zusammen mit dem daran befindlichen Schwaderrotor zum Fahrgestell hin verschwenkt, wenn die Tragschwinge um die Achse verschwenkt wird.

Vorzugsweise ist dazu die Basis des Gelenkvierecks fest mit der Tragschwinge verbunden.

Die Tragschwinge kann wiederum mit mindestens einem Hydraulikzylinder, vorzugsweise einem doppelt wirkenden Hydraulikzylinder, verschwenkt werden.

Die Aushebekinematik, d. h. das Gelenkviereck, kann eine Kreiselkopfaufnahme aufweisen, die als Koppelglied an dem Gelenkviereck angeordnet ist, wobei der Schwaderrotor über ein Kugelgelenk mit diesem Koppelglied verbunden ist. Durch ein solche s Kugelgelenk kann der Kreiselkopf kardanisch mit der Kreiselkopfaufnahme verbunden sein.

Die Bewegung des Kugelgelenks kann durch eine beabstandete Kulissenführung derart eingeschränkt sein, dass der Schwaderrotor um die Vertikalachse festgelegt, um die Querachse begrenzt beweglich und um die Längsachse frei beweglich ist. Zur Begrenzung der Bewegung des Schwaderrotors um die Längsachse können entsprechende Anschläge vorgesehen sein.

Das Gelenkviereck weist einen unteren sowie ein oder zwei obere Lenker auf, wobei für eine Ausgleichsbewegung um die Längsachse der oder die oberen Lenker der Gelenkviereckskinematik über ein Langloch mit dem Schwaderrotor verbunden ist. Somit ist die Ausgleichsbewegung um die Längsachse des Fahrzeugs durch das Langloch begrenzt.

Bei einem Verfahren zum Überführen von einem an einem Fahrgestell eines Kreiselschwaders beweglich angelenkten Schwaderrotors von einer Arbeitsstellung in eine Transportstellung wird der Schwaderrotor aus einer Arbeitsstellung in eine erhöhte Vorgewendestellung ausgehoben und aus der Vorgewendestellung in eine Diagonale über dem Fahrgestell liegende Position verschwenkt.

Vorzugsweise wird der Schwaderrotor im Wesentlichen bodenparallel in die Vorgewendestellung aus einer Arbeitsstellung, in der sich der Schwaderrotor unterhalb und seitlich des Fahrgestells befindet, angehoben. Der Schwaderrotor kann in der Transportrichtung annähernd mittig über einen mittleren Hauptrahmen des Fahrgestells liegen.

Vorzugsweise wird der Schwaderrotor aus der Vorgewendestellung um 120° bis 150°, vorzugsweise 135°, zum mittleren Hauptrahmen hin verschwenkt.

Die vorliegende Erfindung wird nachfolgend näher unter Bezugnahme der folgenden Zeichnungen erläutert.
- Fig. 1: ist eine schematische rückwärtige Ansicht eines Kreiselschwaders in einer Arbeitsposition gemäß der vorliegenden Erfindung.
- Fig. 2: zeigt eine perspektivische Darstellung eines erfindungsgemäßen Kreiselschwaders in Arbeitsstellung.
- Fig. 3: zeigt eine rückwärtige Ansicht des erfindungsgemäßen Kreiselschwaders, bei dem sich die Schwaderrotoren in einer erhöhten Vorgewendestellung befinden.
- Fig. 4: zeigt in perspektivischer Darstellung den in Fig. 3 gezeigten Kreiselschwader.
- Fig. 5: zeigt den erfindungsgemäßen Kreiselschwader, bei dem die Schwaderrotoren in der diagonalen Transportstellung ruhen.
- Fig. 6: zeigt eine perspektivische Darstellung des erfindungsgemäßen Kreiselschwaders in Transportstellung.
- Fig. 7: zeigt eine erste Ausführungsform der Aushebekinematik des erfindungsgemäßen Kreiselschwaders in einer perspektivisch dargestellten Arbeitsstellung.
- Fig. 8: zeigt in perspektivischer Darstellung die Aushebekinematik in Arbeitsstellung gemäß dem ersten Ausführungsbeispiel.
- Fig. 9: zeigt den Kreiselschwader gemäß dem ersten Ausführungsbeispiel in Vorgewendestellung.
- Fig. 10: zeigt in perspektivischer Darstellung die Aushebekinematik und Schwenkeinrichtung des Kreiselschwaders gemäß dem ersten Ausführungsbeispiel in einer Transportstellung.
- Fig. 11: zeigt in perspektivischer Darstellung einen Ausschnitt eines Kreiselschwaders mit einer Aushebekinematik gemäß einem zweiten Ausführungsbeispiel der vorliegenden Erfindung.
- Fig. 12: zeigt in perspektivischer Darstellung die Aushebekinematik gemäß dem zweiten Ausführungsbeispiel.

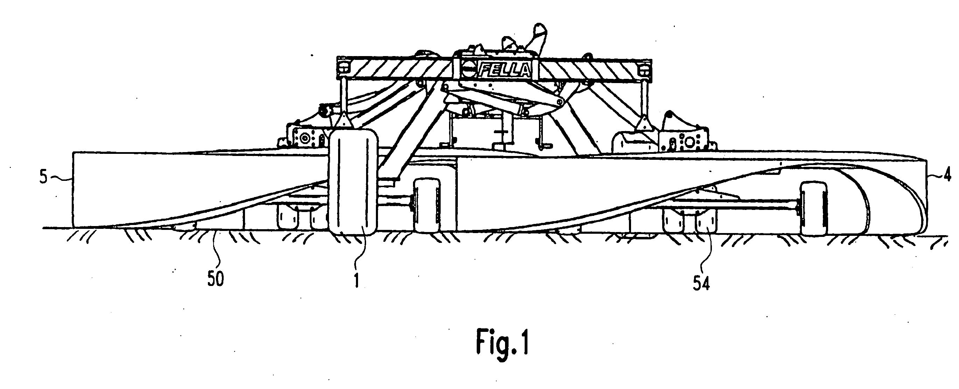

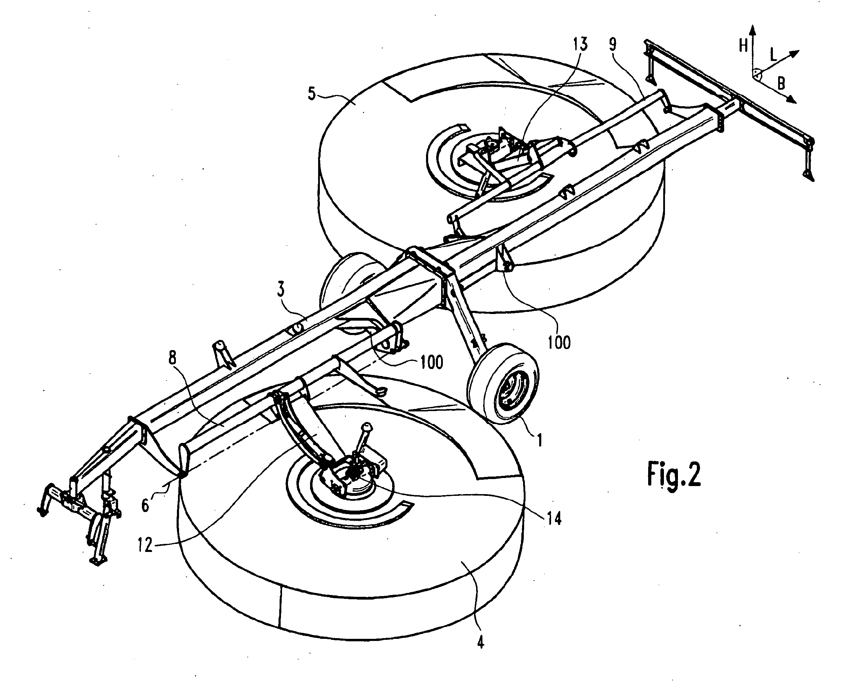

Fig. 1 und 2 zeigen einen Kreiselschwader gemäß der vorliegenden Erfindung. Der Kreiselschwader besteht aus einem über Laufräder 1 abgestützten und gelenkig mit einem nicht näher dargestellten Zugfahrzeug verbundenen Fahrgestell 3. Der mittlere Hauptrahmen des Fahrgestells 3 erstreckt sich in Fahrtrichtung entlang einer Längsachse L. An dem Fahrgestell 3 ist mindestens ein Schwaderrotor 4 vorgesehen. Bei dieser Ausführungsform sind zwei Schwaderrotoren 4, 5 vorgesehen, die sich in einer Arbeitsstellung unterhalb und seitlich des Hauptrahmens des Fahrgestells 3 befinden.

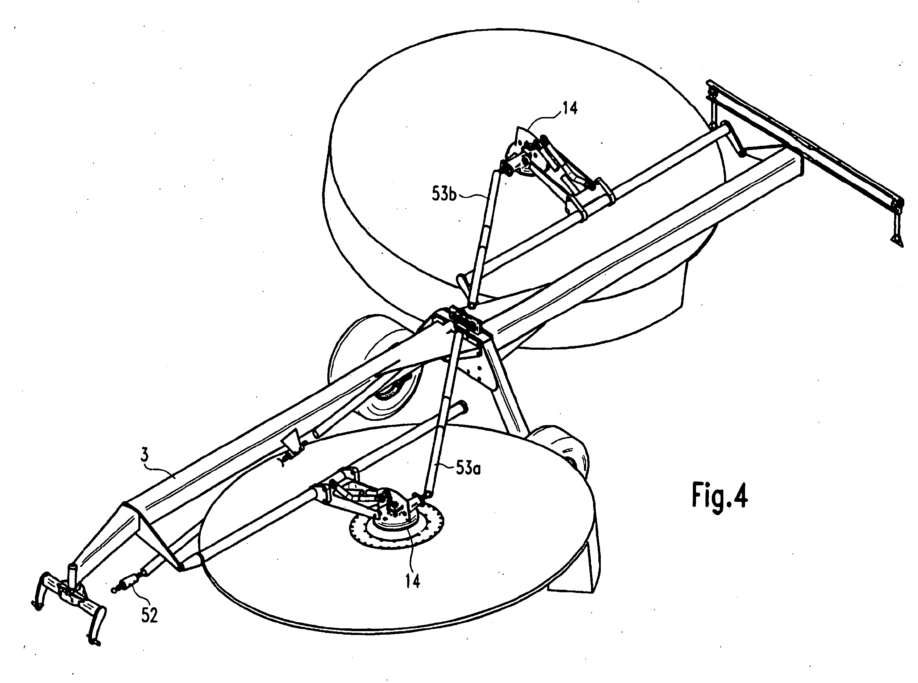

Bei den Schwaderrotoren 4, 5 wurde hier einfachheitshalber ganz schematisch die Außenkontur dargestellt, jedoch nicht die allgemein bekannten sich radial erstreckenden Zinkenarme mit den entsprechenden Zinken. Die Schwaderrotoren 4, 5 weisen, wie aus Fig. 1 ersichtlich, an ihrer Unterseite noch entsprechende Räder 54 auf. In Arbeitsstellung befinden sich die Schwaderrotoren 4, 5 in einer Position derart, dass sie bzw. die nicht dargestellten Zinkenarme den Boden 50 berühren. Auch die Räder 54 berühren den Boden 50. Die Schwaderrotoren 4, 5 drehen sich in bekannter Weise um ihre Mittelachse derart, dass durch die von den Zinkenarmen nach unten abstehenden Zinken das auf der Wiese liegende Heu zu gleichmäßigen Reihen zusammengefasst werden kann. Die Schwaderrotoren 4, 5 werden über eine Zapfwelle vom Traktor angetrieben. In der Fig. 2 werden einfachheitshalber die Antriebswellen nicht dargestellt. Wie jedoch aus Fig. 4 hervorgeht, wird der Kopf 14 des Schwaderrotors 4, 5 über entsprechende Wellen 53a, 53b über die Zapfwelle 52 in bekannter Art und Weise angetrieben.

Hier erfolgt der Antrieb von der Traktorzapfwelle über einen Gelenkwellenstrang zum mittig auf dem Hauptfahrwerk 3 angeordneten Winkelgetriebe und von da über jeweils zwei Weitwinkelgelenkwellen 53a, b auf die Kreiselkopfgetriebe. Die Gelenkwellen 53a, 53b sind so geführt, dass sie alle Bewegungen des Kreiselkopfes mit machen können, ohne dass eine unzulässig hohe Gelenkbeugung entsteht, d.h., die Gelenkwellen können immer gekuppelt bleiben. Bei gleicher Ausführung der Aushebekinematik und der Schwenkeinrichtung wären auch ein hydrostatischer oder elektrischer Antrieb denkbar, die ohne Gelenkwellen auskommen.

Wie aus den Fig. 1 und 2 ersichtlich ist, hat der Kreiselschwader bei dieser Ausführungsform eine Überlappung vom ersten und zweiten Schwaderrotor 4, 5, damit eine saubere Schwadbildung erzielt werden kann. Der Durchmesser der Schwaderrotoren 4, 5 liegt in einem Bereich von 3 bis 4,5 m Durchmesser.

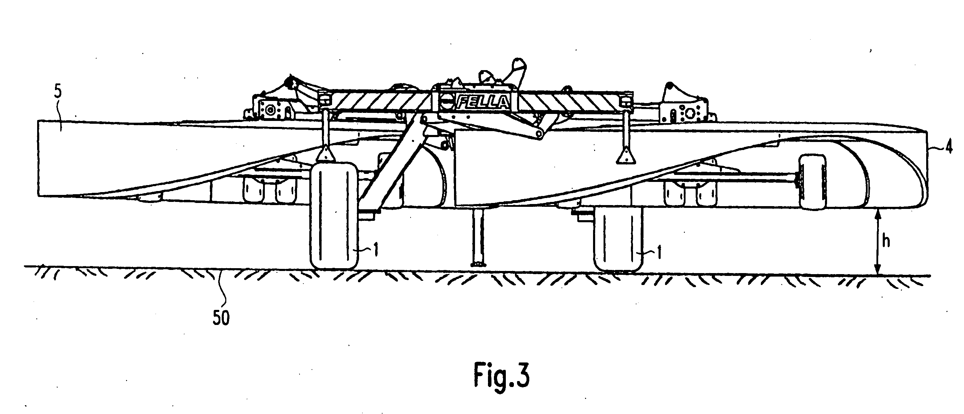

An dem Fahrgestell 3 ist, wie beispielsweise aus Fig. 2 ersichtlich, für jeden Schwaderrotor - hier für die Schwaderrotoren 4, 5 -je eine um eine in Fahrtrichtung liegende Achse (parallel zu einer Längs-Achse L) 6, 7 schwenkbare Tragschwinge 8, 9 vorgesehen. Die Tragschwingen 8, 9 können über doppelwirkende Hydraulikzylinder 100, wie in Fig. 2 durch die Pfeile dargestellt, verschwenkt werden. Die Tragschwingen 8, 9 bilden die Basis für die Aushebekinematiken 12, 13, mit welchen die Schwaderrotoren, 4, 5 in eine erhöhte, wie in Fig. 3 und 4 dargestellt ist, Vorgewendestellung ausgehoben werden können, wie nachfolgend noch näher erläutert werden wird.

Um gemäß der vorliegenden Erfindung den Kreiselschwader in eine Transportstellung zu bringen, bei der weder Transporthöhe noch Transportbreite das gesetzlich zulässige Maß überschreiten, ist einerseits eine Aushebekinematik 12, 13 vorgesehen, um, wie beschrieben, zunächst den Schwaderrotor 4, 5 aus einer Arbeitsstellung (siehe Fig. 1) in eine um eine Höhe h erhöhte Vorgewendestellung (siehe Fig. 3) zu bringen. Dies bringt den Vorteil mit sich, dass aus dieser Vorgewendestellung eine Schwenkbewegung des Schwaderrotors 4, 5 um beispielsweise 120° bis 150°, vorzugsweise 135° in Richtung zum Fahrgestell 3 möglich ist, ohne dass die dem Fahrgestell 3 zugewandte Seite des Schwaderrotors 4, 5 bei der Schwenkbewegung am Boden aufsetzt. Die Aushebung kann vorzugsweise annähernd bodenparallel erfolgen, z. B. über eine nachfolgend detailliert beschriebene Parallelogramm- oder Gelenkviereckskinematik zur Erzielung einer ausreichenden Bodenfreiheit, bei welcher die Kreisel das auf dem Feld liegende Futter oder bereits geformte Schwaden nicht mehr berühren.

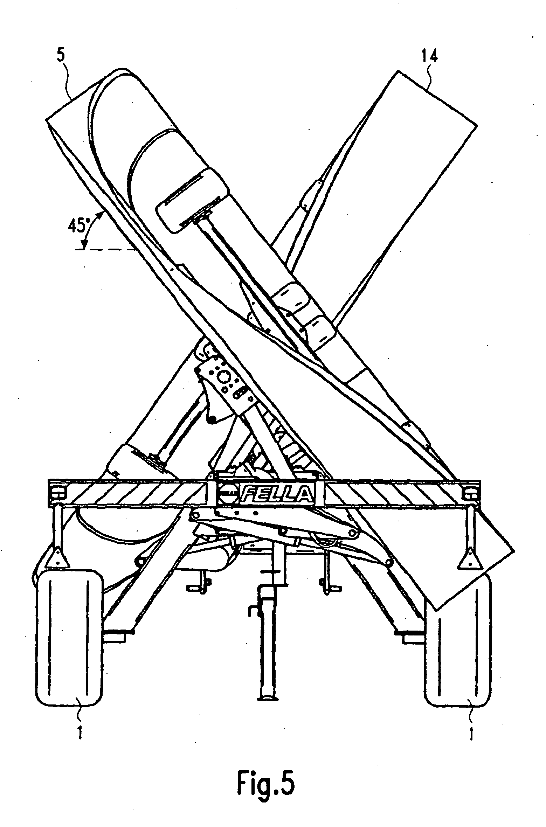

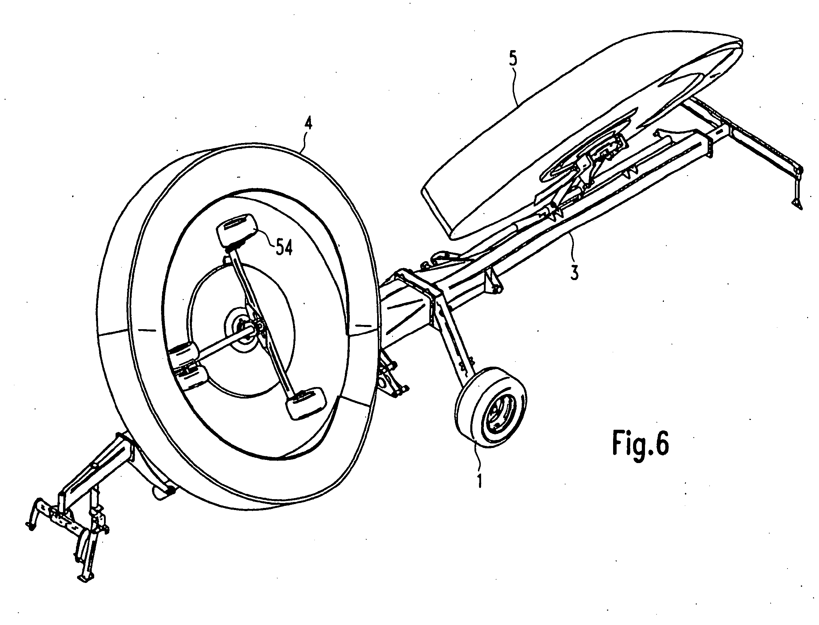

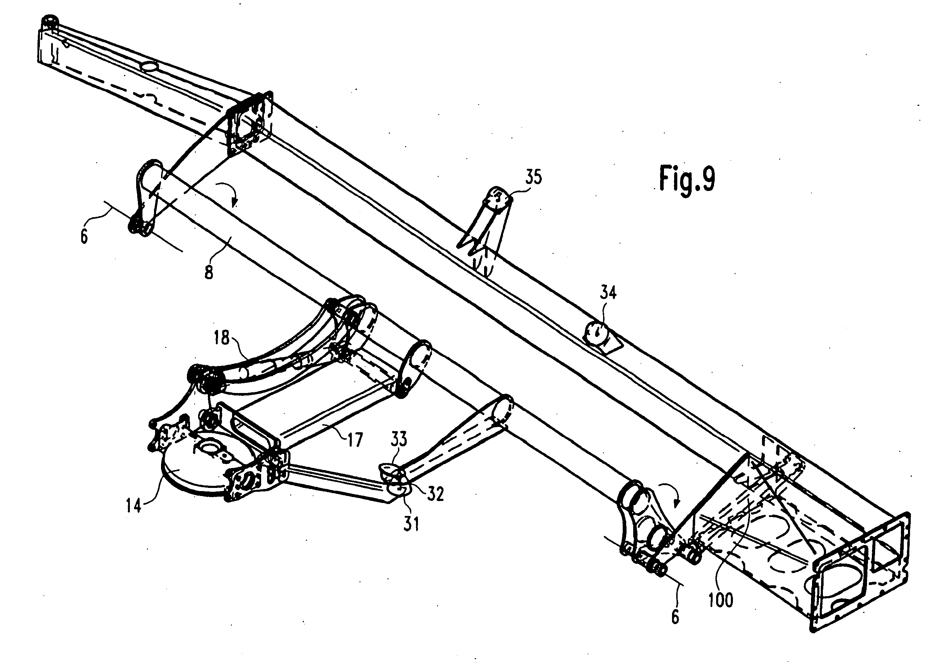

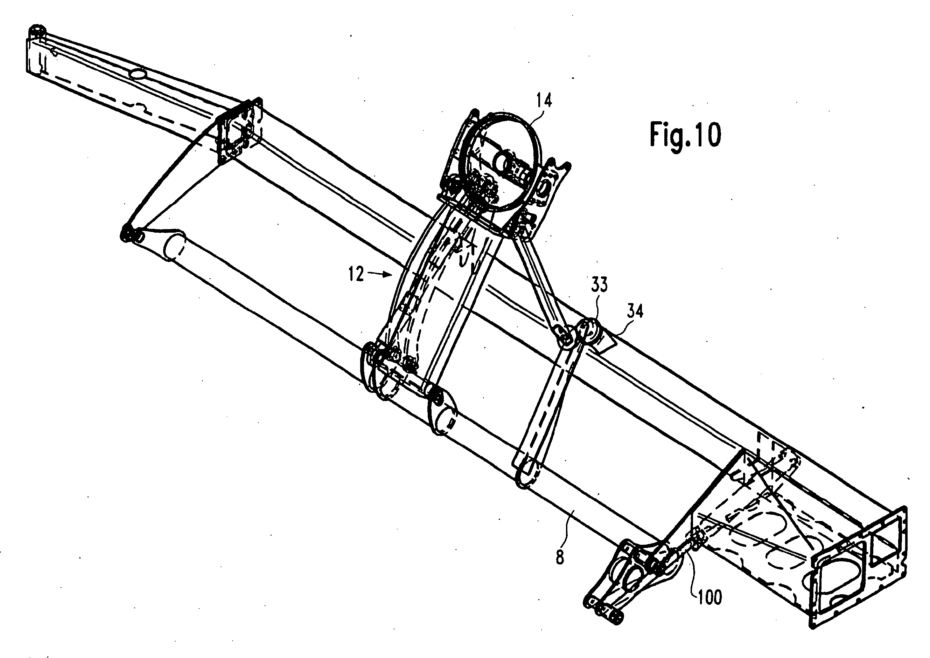

Aus dieser Vorgewendestellung werden die Schwaderrotoren 4, 5 dann aus der seitlich ausladenden Vorgewendestellung in eine vorzugsweise mittig über dem Hauptrahmen des Fahrgestells 3 liegende diagonale Position geschwenkt, wie aus den Fig. 5 und 6 ersichtlich ist. Für das Verschwenken in Transportstellung werden die Tragschwingen 8, 9 mittels der entsprechenden Hubzylinder 100 soweit um die Schwenkachsen 6, 7 zum Hauptrahmen hin verschwenkt, bis die Schwaderrotoren 4, 5 innerhalb der für den Straßenverkehr zulässigen Fahrzeugkontur liegen. Dabei liegen sie vorzugsweise etwa mittig über dem mittleren Hauptrahmen des Fahrgestells 3, das bedeutet, dass der Mittelpunkt der Schwaderrotoren in einem Bereich oberhalb des mittleren Hauptrahmens zu liegen kommt. Diese Schwenkbewegung ist auch gut beim Vergleichen der Fig. 9 und 10 zu erkennen, wobei der Schwaderrotor 4, der über die Aushebekinematik in die Vorgewendestellung gebracht worden ist und fest mit der Tragschwinge 8 verbunden ist, durch Schwenken der Tragschwinge 8, 9 in die sich diagonal erstreckende Transportstellung verschwenkt wird. Wie aus Fig. 9 und 10 hervorgeht, wird dabei die Tragschwinge 8 über den Hubzylinder 100 um die Achse 6 soweit gedreht, bis der mit der Tragschwinge 8 fest verbundene Anschlagtopf 33 auf den am Fahrgestell 3 montierten Gummipuffer 34 zu liegen kommt. Durch einen weiteren Gummipuffer 35 wird der Kreiselkopf in der Transportstellung zusätzlich abgestützt. Vorzugsweise wird der entsprechende Schwaderrotor aus einer im Wesentlichen bodenparallelen Stellung um 120° bis 150°, vorzugsweise 135° geschwenkt. Dies entspricht einer Verschwenkung von 90° plus 45°, d. h. einer Ausrichtung des Schwaderrotors 4, 5 in eine Transportstellung, die unter einem Winkel von etwa 45° zu einer Horizontalebene (L-B Ebene) verläuft.

Für die Aushebung in die Vorgewendestellung gibt es unter anderem die folgenden zwei bevorzugten Ausführungsformen der Aushebekinematik.

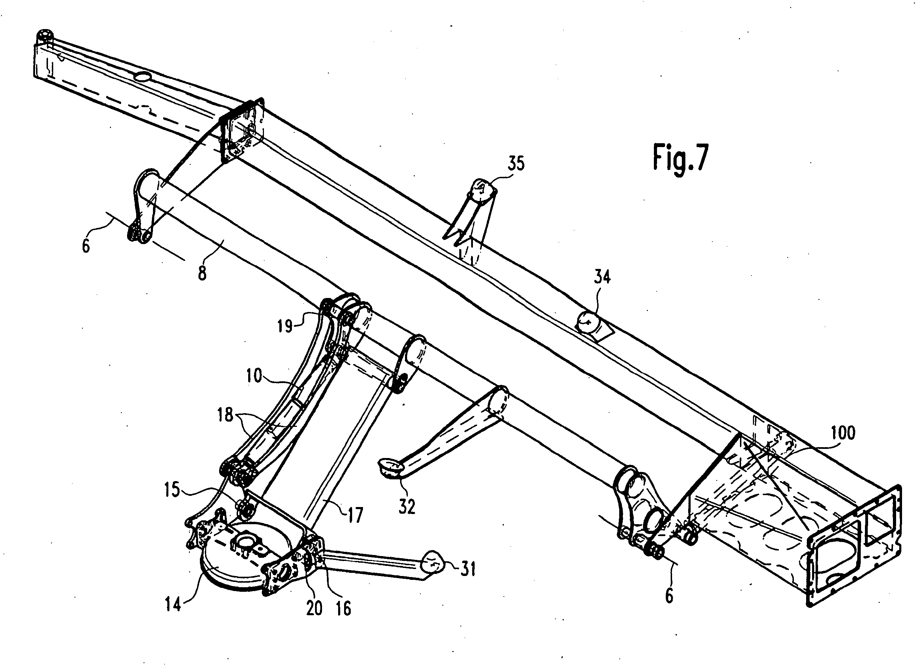

Das erste Ausführungsbeispiel wird in Zusammenhang mit den Fig. 7 bis 10 näher erläutert. In den Fig. 7 bis 10 ist zur besseren Übersicht nur die vordere Hälfte der Maschine mit dem linken Schwaderrotor 4 dargestellt. Fig. 7 zeigt die Aushebekinematik 12 zum Ausheben des Schwaderrotors 4 aus einer Arbeitsstellung; Fig. 9 zeigt sie in einer Vorgewendestellung und Fig. 10 in einer Transportstellung.

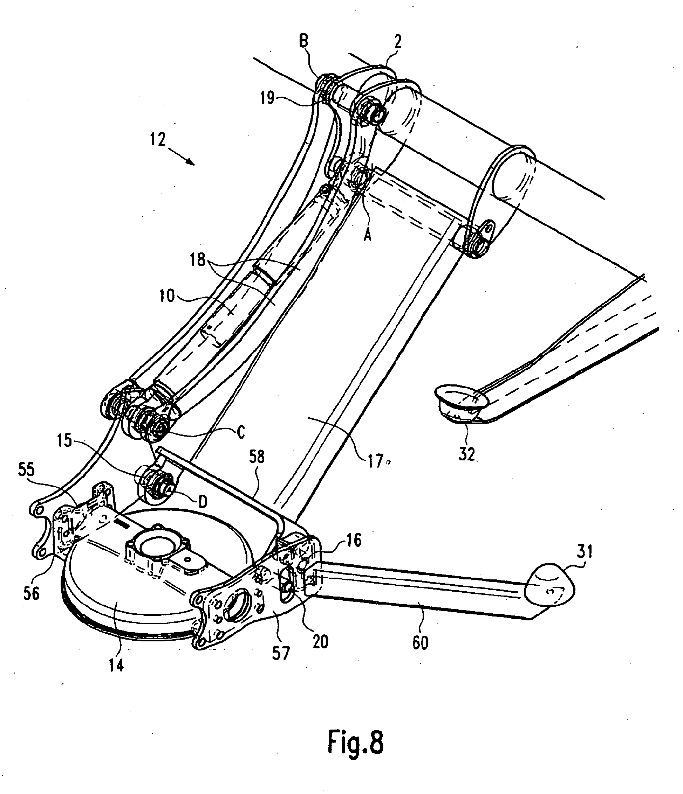

Wie am besten aus Fig. 8 deutlich wird, umfasst die Aushebekinematik 12, 13 zum Ausheben des mindestens einen Schwaderrotors 4, 5 aus der Arbeitsstellung in eine erhöhte Vorgewendestellung ein Gelenkviereck A, B, C, D, dessen Seiten zueinander an den Eckpunkten A, B, C um eine parallel zur Fahrtrichtung (L-Achse) verlaufende Achse, verschwenkt werden können, wobei sich am Punkt D ein Kugelgelenk 15 befindet.

Dabei ist die Basis 2 des Gelenkvierecks A, B, C, D fest mit der Tragschwinge 8, 9 verbunden. Darüber hinaus weist das Gelenkviereck zwei obere Lenker 18, einen unteren Lenker 17 sowie das flache Seitenteil 55 auf. Diagonal in dem Gelenkviereck ist der Hydraulikzylinder 10, der vorzugsweise ein einfach wirkender Hydraulikzylinder ist, vorgesehen. Der Kreiselkopf 14 wird über Halterungen 56 an den Seitenteilen 55, 57 gehalten. Das Seitenteil 57 ist drehbar über den Winkel 58 an Punkt D des Gelenkvierecks gekoppelt. Der Kopf 14 des Schwaderrotors 4 ist somit über das Kugelgelenk 15 und die Führungskulisse 16 (siehe Fig. 8) direkt mit dem unteren Lenker 17 der Gelenkviereckskinematik 12 verbunden. Die Kulissenführung 16 ist derart ausgebildet, dass die Bewegung des Kugelgelenkes so eingeschränkt ist, dass der Schwaderrotor um die Vertikalachse festgelegt, um die Querachse begrenzt beweglich und um die Längsachse frei beweglich ist.

Durch Betätigung des Hydraulikzylinders 10, d. h. durch Verlängerung, können entsprechend der Gelenkviereckskinematik die beiden oberen Lenker 18, der untere Lenker 17 sowie letztendlich der Schwaderrotorkopf 14, an dem der Schwaderrotor 4 befestigt ist, angehoben werden. Dies wird insbesondere beim Vergleich der Fig. 7 und 9 deutlich.

Die beiden oberen Lenker 18 der Gelenkviereckskinematik haben an einem Ende ein Langloch 19, so dass der Schwaderrotor 4, 5 um die Fahrzeuglängsachse begrenzt schwenkbar ist. Beim Ausheben in die Vorgewendestellung wird diese Beweglichkeit dadurch blockiert, dass der diagonal in dem aus oberen Lenker 18 und unteren Lenker 17 gebildeten Gelenkviereck liegende Aushebezylinder 10 den auf Zug beanspruchten oberen Lenker 18 in seinem Langloch 19 auf Anschlag bringt. Für die Ausrichtung des Schwaderrotors 4 um die Längsachse ist ein Anschlag 20 am unteren Lenker vorgesehen, welcher nur beim Ausheben in die Vorgewendestellung infolge der Winkelbewegung zwischen unterem Lenker 17 und Kreiselkopf 14 wirksam wird.

Beim Erreichen der Vorgewendestellung, wie aus Fig. 9 ersichtlich ist, liegt der Gummipuffer 31, der auf dem Ausleger 60 angeordnet ist, der sich von der Seitenwand 57 aus erstreckt, an dem Anschlag 32 an und fixiert den Kreiselkopf 14 um die Querachse. Nun liegt der Kreiselkopf 14 und somit der Schwaderrotor 4 in einer im Vergleich zur Arbeitsstellung erhöhten Vorgewendeposition, wobei hier der Kopf 14 des Schwaderrotors 4 im Wesentlichen bodenparallel angehoben wurde.

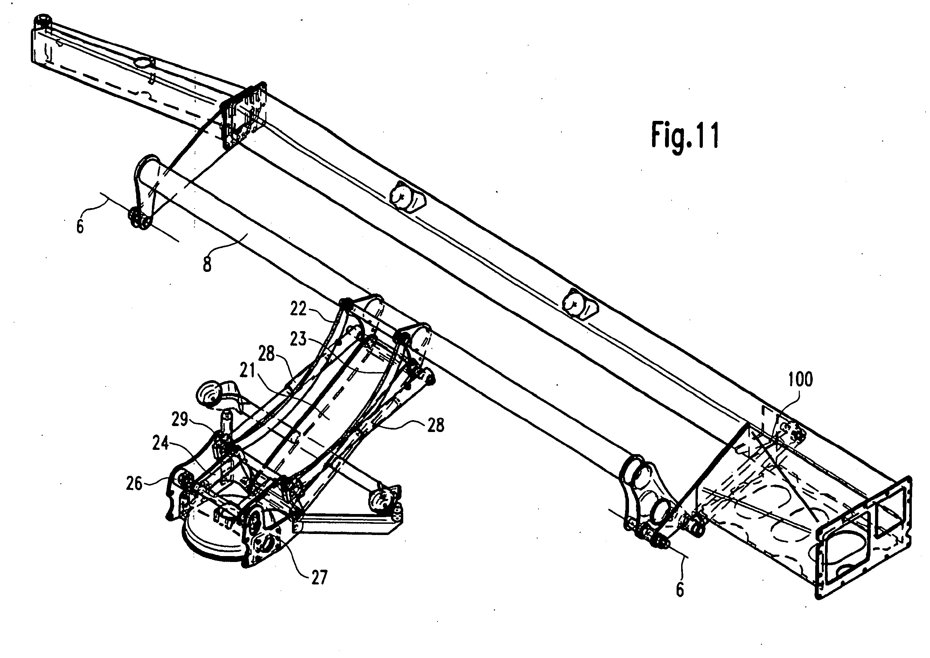

Zum Umstellen von der Vorgewendestellung, wie sie in Fig. 9 gezeigt ist, in die Transportstellung, wie sie in Fig. 11 gezeigt ist, wird, wie zuvor beschrieben, die Tragschwinge 8 über den Hubzylinder 100 um die Achse 6 soweit gedreht, bis der mit der Tragschwinge 8 fest verbundene Anschlagtopf 33 auf dem Gummipuffer 34, der an dem Fahrgestell 3 montiert ist, zu liegen kommt. Durch einen weiteren Gummipuffer 35 auf dem Fahrgestell 3 kann der Kreiselkopf 14 in der Transportstellung zusätzlich abgestützt werden.

Die gezeigte erste Ausführungsform ist lediglich ein Beispiel für eine mögliche Aushebekinematik. Wesentlich dabei ist lediglich, dass die Aushebekinematik 12, 13 ein Gelenkviereck umfasst, dessen Basis fest mit der Tragschwinge 8 verbunden ist, derart, dass der Kopf 14 und somit der Schwaderrotor 4 aus der Arbeitsstellung in eine erhöhte Vorgelegestellung gebracht werden kann, um dann zusammen mit der Trageschwinge 8 in die Transportstellung geschwenkt zu werden.

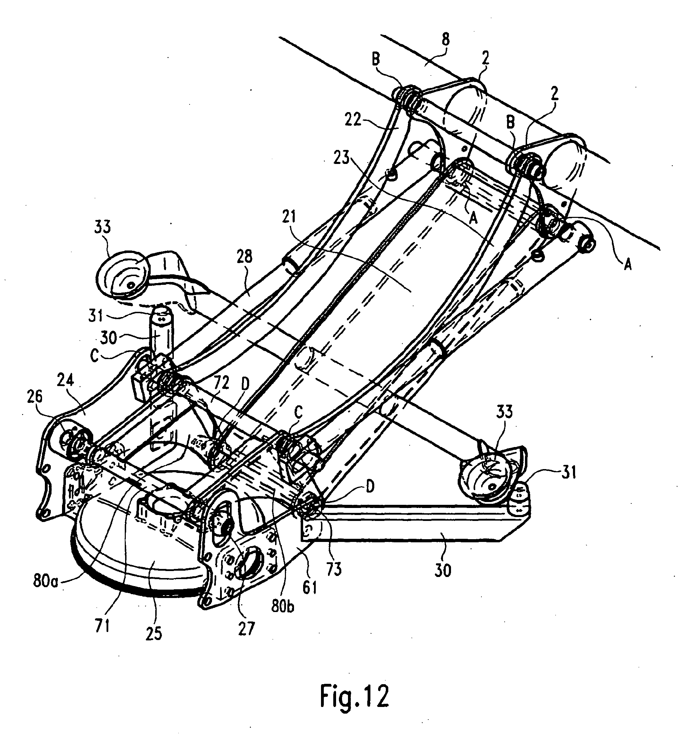

Fig. 11 und 12 zeigen ein weiteres Ausführungsbeispiel für eine Aushebekinematik 12, 13. Wie auch beim ersten Ausführungsbeispiel ist die Aushebekinematik 12, 13 durch ein Gelenkviereck, in diesem Fall durch zwei Gelenkvierecke (A, B, C, D), realisiert. Die Seiten des Gelenkvierecks können an den Eckpunkten A, B, C, D um eine parallel zur Fahrtrichtung verlaufende Längsachse verschwenkt werden. An der Tragschwinge 8 ist das Gelenkviereck (bzw. Vierecke), bestehend aus dem unteren Gelenkviereckslenker 21 und den beiden oberen Gelenkviereckslenkern 22 und 23 angelenkt. Das Koppelglied wird durch die Kreiselkopfaufnahme 24 gebildet. Der Kreiselkopf 25 ist über ein Kugelgelenk 26 kardanisch mit der Kreiselkopfaufnahme 24 verbunden. Durch eine Kulissenführung 27 wird jedoch eine Bewegung um die Vertikalachse verhindert und die Schwenkbewegung um die Querachse begrenzt. Der Kreiselkopf 25 ist an der Kreiselkopfaufnahme 24 und der Wandung 61 gehalten. Die Wandung 61 ist um eine Längsachse, die parallel zur Fahrtrichtung, d.h. zur mittleren Längsachse des Kreiselschwaders läuft, drehbar mit dem unteren Lenker verbunden. Auch hier ist die Basis 2 der Gelenkvierecke jeweils fest mit der Tragschwinge 8 verbunden. Weiter sind zwei Elemente 80a, 80b vorgesehen, durch die sich die Achse 71, die von dem Kugelgelenk 26 zur Kulissenführung 27 läuft, die Achse 72, die durch das Langloch 29, den Hydraulikzylinder 28 sowie durch die oberen Lenker 21 läuft, ebenso wie die Achse 73, die durch den unteren Lenker und die Seitenwandung 61 läuft, erstrecken.

Für die Aushebung des Kreiselkopfes 25 in die Vorgewendestellung sind einfach wirkende Hubzylinder 28 diagonal innerhalb der Gelenkvierecke A, B, C, D angeordnet. Durch die Betätigung der Hydraulikzylinder 28, d.h. durch Verlängerung, können entsprechend der Gelenkviereckskinematik die oberen Lenker 22, 23, der untere Lenker 21 und somit der kardanisch gelagerte Kreiselkopf angehoben werden. Die Ausgleichsbewegung um die Längsachse des Fahrzeugs ist durch das Langloch 29 begrenzt. Die aus Kugelgelenk 26 und Kulissenführung 27 gebildete Kreiselkopfaufhängung ist gegenüber dem Schwerpunkt des Schwaderrotors nach außen versetzt angeordnet. Dadurch kippt der Schwaderrotor 4, 5 innerhalb des, durch das Langloch 29, das hier im Koppelglied 24 vorgesehen ist, beim Anheben immer so, dass der mit seiner nach außen liegenden Seite höher zu liegen kommt, als mit der in Fahrzeugmitte befindlichen Seite. Beim Erreichen der Vorgewendestellung wird die kardanische Beweglichkeit des Kreisels durch die an den Auslegern 30 sitzenden Gummipuffer 31, welche an den Anschlagflächen 36 des mit dem unteren Gelenkvierecklenkers 21 verbundenen Anschlagträgers 37 zur Anlage kommen, fixiert. Die Ausleger 30 erstrecken sich einmal von der Wandung 61 und dem Koppelglied 24 aus.

Die Umstellung von der Vorgewendestellung in die Transportstellung erfolgt wie beim ersten Ausführungsbeispiel durch Drehen der Tragschwinge 8 über den Hubzylinder 100, bis die Anschlagtöpfe 33 auf den Gummipuffern 34 aufsitzen. Die kadanische Kreiselaufhängung sorgt hier für eine optimale Bodenanpassung.

Wesentlich hier ist wieder, dass der Kreiselkopf über eine Gelenkviereckskinematik angehoben werden kann, wobei an der Gelenkviereckskinematik eine kardanische Kreiselkopfaufnahme vorgesehen ist.

Wie bereits in Zusammenhang mit Fig. 4 erläutert, erfolgt der Antrieb der Schwaderrotoren 4, 5 in bekannter Weise über die Antriebszapfwelle 52.

Die vorherigen Ausführungsbeispiele wurden mit zwei zueinander versetzten Schwaderrotoren 4, 5 beschrieben. Es können jedoch auch mehrere Schwaderrotoren zueinander versetzt vorgesehen werden.

Hier wurde die Aushebekinematik und die Schwenkeinrichtung als zwei voneinander unabhängige Bewegungssysteme beschrieben. Es ist jedoch auch möglich, ein gemeinsames Bewegungssystem zu verwenden, das gleichzeitig den Schwaderrotor aus einer Arbeitsstellung in eine erhöhte Vorgewendestellung bringt und gleichzeitig Schwenkbewegung durchführt.

## Patentansprüche

1. Kreiselschwader mit einem Fahrgestell (3), mindestens einem an dem Fahrgestell (3) beweglich angelenkten Schwaderrotor (4) mit einer Aushebekinematik (12, 13) und einer Schwenkeinrichtung (8, 9, 100) für den mindestens einen Schwaderrotor, **dadurch gekennzeichnet, dass**
die Aushebekinematik (12,13) ausgelegt ist zum Ausheben des mindestens einen Schwaderrotors (4, 5) aus einer Arbeitsstellung in eine erhöhte Vorgewendestellung, und
die Schwenkeinrichtung (8, 9,100) ausgelegt ist zum Schwenken des mindestens einen Schwaderroters (4, 5) aus der Vorgewendestellung in eine diagonal über dem Fahrgestell (3) liegende Transportstellung, und **dadurch,** dass
die Aushebekinematik (12,13) derart ausgebildet ist, dass sie den mindestens einen Schwaderrotor (4, 5) aus der unterhalb und seitlich des Fahrgestells (3) befindlichen Arbeitsstellung annähernd bodenparallel in die Vorgewendestellung aushebt, wobei der Durchmesser des mindestens einen Schwaderrotors 3 bis 4,5 m aufweist.

2. Kreiselschwader nach Anspruch 1, **dadurch gekennzeichnet, dass** der mindestens eine Schwaderrotor (4, 5) in der Transportstellung annähernd mittig über einem mittleren Hauptrahmen des Fahrgestells (3) liegt.

3. Kreiselschwader nach einem der Ansprüche 1 oder 2, **dadurch gekennzeichnet, dass** die Aushebekinematik (12,13) und die Schwenkeinrichtung (6, 8,100) zwei voneinander unabhängige Bewegungssysteme sind.

4. Kreiselschwader nach mindestens einem der Ansprüche 1 bis 3, **dadurch gekennzeichnet, dass** die Aushebekinematik (12, 13) eine Gelenkviereckskinematik (A, B, C, D) umfasst.

5. Kreiselschwader nach Anspruch 4, **dadurch gekennzeichnet, dass** dem Gelenkviereck der Gelenkviereckskinematik ein oder mehrere Hydraulikzylinder (10), insbesondere einfach wirkende Hydraulikzylinder (10) zugeordnet sind.

6. Kreiselschwader nach mindestens einem der Ansprüche 1 bis 5, **dadurch gekennzeichnet, dass** die Schwenkeinrichtung (6, 8, 100) eine Tragschwinge (8, 9) umfasst, die um eine in Fahrtrichtung liegende Achse (6, 7) schwenkbar ist, wobei die Aushebekinematik (12,13) an der Tragschwinge (8, 9) befestigt ist.

7. Kreiselschwader nach Anspruch 4 und 6, **dadurch gekennzeichnet, dass** die Basis (2) des Gelenkvierecks fest mit der Tragschwinge (8, 9) verbunden ist.

8. Kreiselschwader nach Anspruch 6 oder 7, **dadurch gekennzeichnet, dass** die Tragschwinge (8, 9) mit mindestens einem Hydraulikzylinder (100), vorzugsweise mit mindestens einem doppeltwirkenden Hydraulikzylinder (100), verschwenkbar ist

9. Kreiselschwader nach mindestens einem der Ansprüche 4 bis 8, **dadurch gekennzeichnet, dass** an dem Gelenkviereck (A, B, C, D) ein Koppelglied (24) angeordnet ist, das eine Kreiselkopfaufnahme bildet, wobei der Schwaderrotor (4, 5) über ein Kugelgelenk (26) mit dem Koppelglied (24) verbunden ist.

10. Kreiselschwader nach Anspruch 9, **dadurch gekennzeichnet, dass** die Bewegungdes Kugelgelenkes (26) durch eine beabstandete Kulissenführung (27) derart eingeschränkt ist, dass der Schwaderrotor (4, 5) um die Vertikalachse festgelegt ist, um die Querachse begrenzt beweglich und um die Längsachse frei beweglich ist.

11. Kreiselschwader nach mindestens einem der Ansprüche 1 bis 10, **dadurch gekennzeichnet, dass** zur Begrenzung der Bewegung des Schwaderrotors (4, 5) um die Längsachse Anschläge (20) vorgesehen sind.

12. Kreiselschwader nach mindestens einem der Ansprüche 1 bis 11, **dadurch gekennzeichnet, dass** Anschläge (30, 31, 33) vorgesehen sind, die beim Ausheben des Schwaderrotors (4, 5) in die Vorgewendestellung wirksam werden, und die den Schwaderrotor (4) sowohl um die Quer- als auch um die Längsachse in eine bestimmte Position ausrichten und fixieren.

13. Kreiselschwader nach mindestens einem der Ansprüche 1 bis 12, **dadurch gekennzeichnet, dass** der Schwaderrotor (4, 5) direkt an einem ersten Lenker (17)
der Gelenkviereckskinematik (A, B, C, D) über ein Kugelgelenk (15) und eine davon beabstandete Kulissenführung (16) angelenkt ist.

14. Kreiselschwader nach mindestens einem der vorhergehenden Ansprüche, **dadurch gekennzeichnet, dass** das Gelenkviereck (A, B, C, D) einen unteren (17, 21) sowie ein oder zwei obere (18,19, 22, 32) Lenker umfasst, wobei für eine Ausgleichsbewegung um die Längsachse der oder die oberen Lenker (18, 19, 22, 32) über ein Langeloch (19, 29) mit dem Schwaderrotor (4) verbunden sind.

15. Kreiselschwader nach mindestens einem der Ansprüche 1 bis 14, **dadurch gekennzeichnet, dass** die Schwenkeinrichtung (8, 9, 100) den mindestens einen Schwaderrotor um 120° bis 150°, vorzugsweise 135°, zum mittleren Hauptrahmen des Fahrgestells (3) hin verschwenkt.

## Claims

1. Rotary swather with a chassis (3), at least one spreader rotor (4) with a lifting mechanism (12, 13) and a pivoting mechanism (8, 9, 100) for the at least one spreader rotor articulatingly mounted so that it can move on the chassis (3), **characterised in that**
the lifting mechanism (12, 13) is designed to lift the at least one spreader rotor (4, 5) from a working position into a raised pre-deployment position and
the pivoting mechanism (8, 9, 100) is designed to pivot the at least one spreader rotor (4, 5) out of the pre-deployment position into a transport position lying in a diagonal above the chassis (3), and **in that**
the lifting mechanism (12, 13) is designed so that it lifts the at least one spreader rotor (4, 5) approximately parallel with the ground out of the working position disposed underneath and to the side of the chassis (3) into the pre-deployment position, and the diameter of the at least one spreader rotor is 3 to 4.5 m.

2. Rotary swather as claimed in claim 1, **characterised in that** the at least one spreader rotor (4, 5) lies more or less centrally above a central main frame of the chassis (3) in the transport position.

3. Rotary swather as claimed in one of claims 1 or 2, **characterised in that** the lifting mechanism (12, 13) and the pivoting mechanism (6, 8, 100) are two moving systems that are independent of one another.

4. Rotary swather as claimed in at least one of claims 1 to 3, **characterised in that** the lifting mechanism (12, 13) comprises an articulated four-point linkage (A, B, C, D).

5. Rotary swather as claimed in claim 4, **characterised in that** one or more hydraulic cylinders (10), in particular single-acting hydraulic cylinders (10), co-operate with the articulated quadrangle of the articulated four-point linkage.

6. Rotary swather as claimed in at least one of claims 1 to 5, **characterised in that** the pivoting mechanism (6, 8, 100) has a rocker arm (8, 9) which can be pivoted about an axis (6, 7) lying in the direction of travel, and the lifting mechanism (12, 13) is attached to the rocker arm (8, 9).

7. Rotary swather as claimed in claim 4 and 6, **characterised in that** the base (2) of the articulated quadrangle is fixedly connected to the rocker arm (8, 9).

8. Rotary swather as claimed in claim 6 or 7, **characterised in that** the rocker arm (8, 9) can be pivoted by means of at least one hydraulic cylinder (100), preferably by at least one double-acting hydraulic cylinder (100).

9. Rotary swather as claimed in at least one of claims 4 to 8, **characterised in that** a coupling element (24) is provided on the articulated quadrangle (A, B, C, D) which forms a circular head mount, and the spreader rotor (4, 5) is connected to the coupling element (24) via a ball joint (26).

10. Rotary swather as claimed in claim 9, **characterised in that** the movement of the ball joint (26) is restricted by a spaced apart rocker guide (27) so that the spreader rotor (4, 5) is fixed about the vertical axis, displaceable to a limited degree about the transverse axis and freely displaceable about the longitudinal axis.

11. Rotary swather as claimed in at least one of claims 1 to 10, **characterised in that** stops (20) are provided in order to restrict the movement of the spreader rotor (4, 5) about the longitudinal axis.

12. Rotary swather as claimed in at least one of claims 1 to 11, **characterised in that** stops (30, 31, 33) are provided which become active as the spreader rotor (4, 5) is being lifted out of the pre-deployment position and which orient and secure the spreader rotor (4) in a specific position about both the transverse and the longitudinal axes.

13. Rotary swather as claimed in at least one of claims 1 to 12, **characterised in that** the spreader rotor (4, 5) is articulatingly linked to a first steering arm (17) of the articulated four-point linkage (A, B, C, D) via a ball joint (15) and a rocker guide (16) spaced at a distance apart from it.

14. Rotary swather as claimed in at least one of the preceding claims, **characterised in that** an articulated quadrangle (A, B, C, D) comprises a bottom (17, 21) and one or two top (18, 19, 22, 32) steering arms, and the top steering arm or arms (18, 19, 22, 32) are connected to the spreader rotor (4) via a slot (19, 29) in order to effect a compensating movement about the longitudinal axis.

15. Rotary swather as claimed in at least one of claims 1 to 14, **characterised in that** the pivoting mechanism (8, 9, 100) pivots the at least one spreader rotor by 120° to 150°, preferably 135°, towards the central main frame of the chassis (3).

## Revendications

1. Andaineuse rotative, avec un châssis (3), au moins un rotor andaineur (4) articulé de façon mobile sur le châssis (3) et comprenant un mécanisme cinématique de levage (12, 13) et un dispositif de pivotement (8, 9, 100) pour ledit au moins un rotor andaineur, **caractérisée en ce que**
le mécanisme cinématique de levage (12, 13) est conçu pour soulever ledit au moins un rotor andaineur (4, 5) d'une position de travail vers une position de tournière relevée, et
le dispositif de pivotement (8, 9, 100) est conçu pour faire pivoter ledit au moins un rotor andaineur (4, 5) de la position de tournière vers une position de transport située en diagonale au-dessus du châssis (3), et **en ce que**
le mécanisme cinématique de levage (12, 13) est réalisé de telle sorte qu'il soulève ledit au moins un rotor andaineur (4, 5) de la position de travail située au-dessous et à côté du châssis (3) de façon approximativement parallèle au sol vers la position de tournière, le diamètre dudit au moins un rotor andaineur mesurant de 3 à 4,5 m.

2. Andaineuse rotative selon la revendication 1, **caractérisée en ce que** ledit au moins un rotor andaineur (4, 5) se situe dans la position de transport approximativement au milieu au-dessus d'un cadre principal central du châssis (3).

3. Andaineuse rotative selon l'une quelconque des revendications 1 à 2, **caractérisée en ce que** le mécanisme cinématique de levage (12, 13) et le dispositif de pivotement (6, 8, 100) sont deux systèmes de mouvement indépendants l'un de l'autre.

4. Andaineuse rotative selon au moins l'une quelconque des revendications 1 à 3, **caractérisée en ce que** le mécanisme cinématique de levage (12, 13) comprend un mécanisme cinématique en quadrilatère articulé (A, B, C, D).

5. Andaineuse rotative selon la revendication 4, **caractérisée en ce que** le quadrilatère articulé du mécanisme cinématique en quadrilatère articulé se voit attribuer un ou plusieurs vérins hydrauliques (10), en particulier des vérins hydrauliques simple effet (10).

6. Andaineuse rotative selon au moins l'une quelconque des revendications 1 à 5, **caractérisée en ce que** le dispositif de pivotement (6, 8, 100) comprend une bielle porteuse (8, 9) pivotante autour d'un axe (6, 7) situé dans le sens de la marche, le mécanisme cinématique de levage (12, 13) étant fixé à la bielle porteuse (8, 9).

7. Andaineuse rotative selon les revendications 4 et 6, **caractérisée en ce que** la base (2) du quadrilatère articulé est reliée solidement à la bielle porteuse (8, 9).

8. Andaineuse rotative selon la revendication 6 ou 7, **caractérisée en ce que** la bielle porteuse (8, 9) peut être amenée à pivoter par au moins un vérin hydraulique (100), de préférence par au moins un vérin hydraulique double effet (100).

9. Andaineuse rotative selon au moins l'une quelconque des revendications 4 à 8, **caractérisée en ce que** sur le quadrilatère articulé (A, B, C, D), un élément de couplage (24) est disposé formant un logement de tête rotative, le rotor andaineur (4, 5) étant relié par l'intermédiaire d'un joint à rotule (26) à l'élément de couplage (24).

10. Andaineuse rotative selon la revendication 9, **caractérisée en ce que** le mouvement du joint à rotule (26) est limité par un guidage coulissant (27) espacé de telle sorte que le rotor andaineur (4, 5) est fixé autour de l'axe vertical, mobile dans certaines limites autour de l'axe transversal et mobile librement autour de l'axe longitudinal.

11. Andaineuse rotative selon au moins l'une quelconque des revendications 1 à 10, **caractérisée en ce que** des butées (20) sont prévues pour limiter le mouvement du rotor andaineur (4, 5) autour de l'axe longitudinal.

12. Andaineuse rotative selon au moins l'une quelconque des revendications 1 à 11, **caractérisée en ce que** des butées (30, 31, 33) sont prévues pour intervenir lorsque le rotor andaineur (4, 5) est soulevé vers la position de tournière, et qui orientent et fixent le rotor andaineur (4) dans une certaine position à la fois autour de l'axe transversal et autour de l'axe longitudinal.

13. Andaineuse rotative selon au moins l'une quelconque des revendications 1 à 12, **caractérisée en ce que** le rotor andaineur (4, 5) est articulé directement au niveau d'un premier bras oscillant (17) du mécanisme cinématique en quadrilatère articulé (A, B, C, D) par l'intermédiaire d'un joint à rotule (15) et d'un guidage coulissant espacé par rapport à celui-ci.

14. Andaineuse rotative selon au moins l'une quelconque des revendications précédentes, **caractérisée en ce que** le quadrilatère articulé (A, B, C, D) comprend un bras oscillant inférieur (17, 21) ainsi qu'un ou deux bras oscillants supérieurs (18, 19, 22, 32), dans laquelle, pour un mouvement de compensation autour de l'axe longitudinal, le ou les bras oscillants supérieurs (18, 19, 22, 32) sont reliés au rotor andaineur (4) par un trou oblong (19, 29).

15. Andaineuse rotative selon au moins l'une quelconque des revendications 1 à 14, **caractérisée en ce que** le dispositif de pivotement (8, 9, 100) fait pivoter ledit au moins un rotor andaineur de 120° à 150°, de préférence de 135°, vers le cadre principal central du châssis (3).
